# EUROPEAN PATENT APPLICATION

(11) **EP 3 276 549 A1**
(43) Date of publication of application: **31.01.2018**
(21) Application number: 17182218.2
(22) Date of filing: 19.07.2017
(51) Int. Cl.: G06Q 10/06

(54) **BIOMETRIC-BASED RESOURCE ALLOCATION**

(30) Priority: 26.07.2016 US 201615220160
(71) Applicant: Accenture Global Solutions Limited, Dublin 4 (IE)
(72) Inventor: SARVANA, Obaid, San Francisco, IL Illinois 94110 (US); BLUM, Brent, Naperville, CA California 60564 (US); JACOBSON, Erik, St Albans, Hertfordshire (GB)
(74) Representative: Swindell & Pearson Limited

(57) **Abstract**

Computerized methods and systems, including computer programs encoded on a computer storage medium, may adaptively allocate resources within an enterprise. For example, a computing system may identify tasks assigned to a user for completion within a current workday. The tasks may be associated with task scores that indicate a level of risk or complexity of each of the tasks. The computer system may obtain biometric data captured by one or more biometric sensors during prior time periods, detect, within the first biometric data, a time-varying pattern in a biometric characteristic of the user, and determining a schedule for completing the tasks during the current workday. The schedule may be consistent with the task scores and the detected time-varying pattern in the biometric characteristic of the user.

## Description

### FIELD

This specification describes technologies related to enterprise resource management.

### BACKGROUND

Modern enterprises expend significant time, energy, and funds to develop and implement scheduling operations that allocate tasks to various employees for completion during one or more workdays.

### SUMMARY

This specification describes computerized processes that allocate outstanding tasks within an enterprise to one or more employees based on collected biometric data that characterizes not only the employees' current physiological state, but temporal variations in the physiological characteristics of the employees throughout prior workdays. For example, the employees may wear, operate, or possess one or more biometric sensor devices, which collect and store biometric data, such as heart rates, rates of respiration, blood pressures, and body temperatures. At certain intervals, the biometric sensor devices transmit portions of the stored biometric data to a scheduling system, which may store the transmitted biometric data in a data repository.

The scheduling system may, in some aspects, apply one or more machine learning techniques to the stored biometric data to detect time-varying patterns in an employee's biometric data throughout prior workdays, and to correlate these time-varying patterns to expected levels of stress, fatigue, mental focus, and other biometric characteristics of an employee during one or more future workdays. The scheduling system may also identify one or more tasks assigned to the employee for completion during a current workday, and may establish task scores for each of the outstanding tasks. The established task scores may, in some instances, indicate a corresponding level of complexity and a risk of employee injury associated with each of the outstanding tasks.

Based on the established task scores and the expected levels of stress, fatigue, mental focus, and other biometric characteristics, the scheduling system may generate an optimized completion schedule that matches the risk and complexity of the outstanding tasks to the expected levels of stress, fatigue, and mental focus of the employee during the workday. In other aspects, the scheduling system may also detect a change in the employee's current level of stress, fatigue, or mental focus, and may mandate a break in the employee's schedule when the current level of stress, fatigue, or mental focus is inconsistent with a risk or complexity characterizing a task currently allocated to the employee. These techniques, and those described below, may be used instead of or in addition to techniques that rely on personal observations of employees to identify levels of employee fatigue, stress, or mental focus, which may inaccurately characterize a physiological state of the employees and inadvertently expose these employees to injury.

In one implementation, a system may include one or more processors, and one or more storage devices storing instructions that are operable, when executed by the one or more processors, to cause the one or more processors to perform operations that include obtaining first biometric data associated with a plurality of users and obtaining task data identifying one or more tasks assigned to a first user for completion within a predetermined time period. In some aspects, the first biometric may be being captured by one or more biometric sensors during prior time periods, and the task data may include task scores indicative of a level of complexity or risk associated with each of the tasks. The one or more processors may further perform the operations of, and detecting, within the first biometric data, a time-varying pattern in a biometric characteristic of first one of the users. The one or more processors may also perform the operations of determining a schedule for completing the tasks during the predetermined time period, and transmitting data indicative of the determined schedule to a device of the first user. The established schedule may, for example, consistent with the task scores and the detected time-varying pattern in the biometric characteristic of the first user; and the transmitted data may include portions of the predetermined time period allocated to the assigned tasks.

In certain aspects, the detected time-varying pattern may to a variation in a value of the biometric characteristic across portions of the prior time periods, and the step of determining may include determining, based on the detected time varying patterns, biometric scores indicative of the biometric characteristic during portions of the predetermined time period, applying one or more optimization algorithms to the task and biometric scores, and determining the schedule for completing the assigned tasks during the predetermined time period based on an outcome of the applied optimization algorithms.

The first biometric data may, for example, include at least one of a heart rate, a respiration rate, a blood pressure, a body temperature, a skin conductance, EEG data, location data, or sleep data, and the biometric characteristic may include at least one of a user stress, a user fatigue, or a user focus. The one or more processors may, in additional aspects, further perform the operations of detecting, within the first biometric data, time-varying patterns in a plurality of biometric characteristic of the first user, and determining the schedule for completing the assigned tasks during the predetermined time period based on the detected time-varying patterns in the biometric characteristics of the first user. In other aspects, the step of detecting may include applying one or more analytical processes to at least a portion of the first biometric data, and based on an outcome of the applied analytical processes, detecting the time-varying pattern in the biometric characteristic of the first user. In some aspects, the analytical processes may include at least one of a machine learning algorithm, an algorithmic technique, a research-based technique, or a probabilistic technique.

In some aspects, the one or more processors may further perform the operation of generating at least one of the task scores based on portions of the task data that are indicative of at least one of a complexity of or a risk factor associated with the assigned tasks. Further, the one or more processors may also perform the operations of receiving second biometric data indicative of a current physiological state of the first user, and generating, based on the second biometric data, a biometric score that reflects the current level of stress, a fatigue, or a focus of the first user. In additional aspects, the one or more processors further perform the operations of determining that the generated biometric score exceeds a threshold score associated with a first one of the assigned tasks, and in response to the determination that the generated biometric score exceeds the threshold score, modifying the determined schedule to replace the first assigned task with a break having a predetermined duration.

Additionally, in certain aspects, the one or more processors may further perform the steps of detecting, within the biometric data, a time-varying pattern in the biometric characteristic of each of the users during the prior time periods, based on the detected time-varying patterns, assigning at least one of the tasks to each of the users for completion within corresponding portions of the predetermined time period, and transmitting data indicative of the at least one assigned task to devices associated with each of the users. For example, the step of determining may also include determining, based on the detected time varying patterns of each of the users, biometric scores indicative of the biometric characteristic of corresponding ones of the users during portions of the predetermined time period, applying one or more optimization algorithms to the task and biometric scores, and assigning the at least one task to each of the second users based on an outcome of the applied optimization algorithms.

The step of detecting the time-varying patterns may, in some aspects, include applying a machine-learning algorithm to at least a portion of the second biometric data, and based on an outcome of the applied machine-learning algorithm, detecting the time-varying pattern in the biometric characteristic of each of the users. In further aspects, the one or more processors further perform the operations of obtaining data indicative of a performance of at least one of the users during a completion of a prior task, and assigning the at least one task to the at least one of the users based on the obtained performance data. For example, the performance data may identify at least one of a work quality of a completion speed.

In other implementations, a system may include one or more processors, and one or more storage devices storing instructions that are operable, when executed by the one or more processors, to cause the one or more processors to perform operations that include obtaining task data identifying one or more tasks. The task data may, for example, include task scores indicative of a level of risk associated with each of the tasks. The one or more processors may further perform the operations of obtaining first biometric data associated with a plurality of users, detecting, within the first biometric data, a time-varying pattern in a biometric characteristic of each of the users during the prior time periods, assigning at least one of the tasks to each of the users for completion within corresponding portions of a predetermined time period. In some aspects, the first biometric data may be captured by one or more biometric sensors during prior time periods, and the assigned tasks may be consistent with the task scores and the detected time-varying patterns in the biometric characteristics of the users. The one or more processors further perform the operations of transmitting data indicative of the at least one assigned task to devices associated with corresponding ones of the users. In other aspects, the transmitted data may identify, for each of the users, the at least one assigned task and the corresponding portion of the predetermined time period.

In some aspects, the detected time-varying patterns may correspond to a variation in a value of the biometric characteristic of corresponding ones of the users across portions of the prior time periods, and the step of determining may include, based on the detected time varying patterns, determining biometric scores indicative of the biometric characteristic of the corresponding ones of the users during portions of the predetermined time period, applying one or more optimization algorithms to the task and biometric scores, and assigning the at least one task to each of the first users based on an outcome of the applied optimization algorithms.

In further aspects, the step of detecting the time-varying patterns within the first biometric data may include applying one or more analytical processes to at least a portion of the first biometric data, and based on an outcome of the applied analytical processes, detecting the time-varying patterns in the biometric characteristic of the users. In some aspects, the analytical processes may include at least one of a machine learning algorithm, an algorithmic technique, a research-based technique, or a probabilistic technique. The one or more processors may also perform the operations of obtaining data indicative of a performance of at least one of the users during a completion of a prior task, and assigning the at least one task to the at least one user based on the obtained performance data. The performance data may, for example, identify at least one of a work quality of a completion speed. Additionally, the first biometric data may include at least one of a heart rate, a respiration rate, a blood pressure, a body temperature, a skin conductance, EEG data, location data, or sleep data, and the biometric characteristic may include at least one of a user stress, a user fatigue, or a user focus.

The one or more processors may, in certain aspects, perform the operations of assigning the tasks to a first one of the users for completion during the predetermined time period, and determining a schedule for completing the tasks during the predetermined time period, and transmitting data indicative of the established schedule to the device of the first user, the transmitted data identifying a portion of the predetermined time period allocated to each of the assigned tasks. The determined schedule may, for example, be consistent with the task scores and the detected time-varying pattern in the biometric characteristic of the first user. Additionally, the one or more processors may further perform the operations of receiving second biometric data, generating, based on the second biometric data, a biometric score that reflects at least one of a stress, a fatigue, or a focus of the first user, determining that the generated biometric score exceeds a threshold score associated with a first one of the assigned tasks, and in response to the determination that the generated biometric score exceeds the threshold score, modifying the determined schedule to replace the first assigned task with a break having a predetermined duration.

In other implementations, corresponding computer-implemented methods and computer programs may be configured to perform those steps performed by the example apparatus described above. One or more computer programs can be so configured by virtue of having instructions that, when executed by device, cause the device to perform the actions.

The details of one or more implementations of the subject matter described in this specification are set forth in the accompanying drawings and the description below. Other potential features, aspects, and advantages of the subject matter will become apparent from the description, the drawings, and the claims.

### BRIEF DESCRIPTION OF THE DRAWINGS

FIG. 1 is a diagram of an environment in which a scheduling system allocates outstanding tasks to an employee of an enterprise based on biometric data.
FIGs. 2A and 2B are flowcharts of exemplary processes for allocating tasks to employees for completion based on collected biometric data.
FIG. 2C is a table illustrating a calculation of an aggregated risk score for an employee of an enterprise based on collected biometric data and obtained task data.
FIG. 3 is a flowchart of an exemplary process for dynamically adjusting allocated tasks based on received biometric data.
FIG. 4 is a flowchart of an exemplary process for allocating, on an ad-hoc basis, tasks to employees for completion based on collected biometric data characterizing the employees' physiological condition.
FIG. 5 is a diagram of an example computing system that may perform one or more of the disclosed computer-implemented processes.

Like reference numbers and designations in the various drawings indicate like elements.

### DETAILED DESCRIPTION

This specification describes a system that allocates outstanding tasks within an enterprise to one or more employees based on collected biometric data that characterizes not only the employees' current physiological state, but temporal variations in the physiological characteristics of the employees throughout prior workdays. By way of example, the enterprise may include any of a number of business, governmental, or regulatory entities, which may employ many hundreds or thousands of individuals in various positions. Although the employees' duties often vary based on their position within the enterprise, the tasks assigned to these employees generally include subsets of mundane tasks (or tasks delivering little value) requiring minimal physical or mental exertion, and subsets of high value, complicated, or dangerous tasks requiring significant physical exertion and mental focus to ensure a successful and safe completion.

The system may, in some instances, generate metrics, e.g., task scores, indicative of a level of complexity or risk associated with these tasks (e.g., as derived from research, industry and/or historical data), and may predict an expected physiological state of an employee at various times during the workday based on trends within collected biometric data. For example, and based on the collected biometric data, the system may determine that an employee is most alert and least fatigued during a certain portion of the workday, such as prior to a lunch break, and may assign the most physically and/or mentally challenging tasks to the employee for completion prior to the lunch break. By matching outstanding tasks to an expected or actual physiological state of an employee, the exemplary systems and processes optimize the allocation of outstanding tasks to appropriate employees and minimize a risk of injury resulting from potential mismatches between allocated tasks and actual employee stress, fatigue, or mental focus.

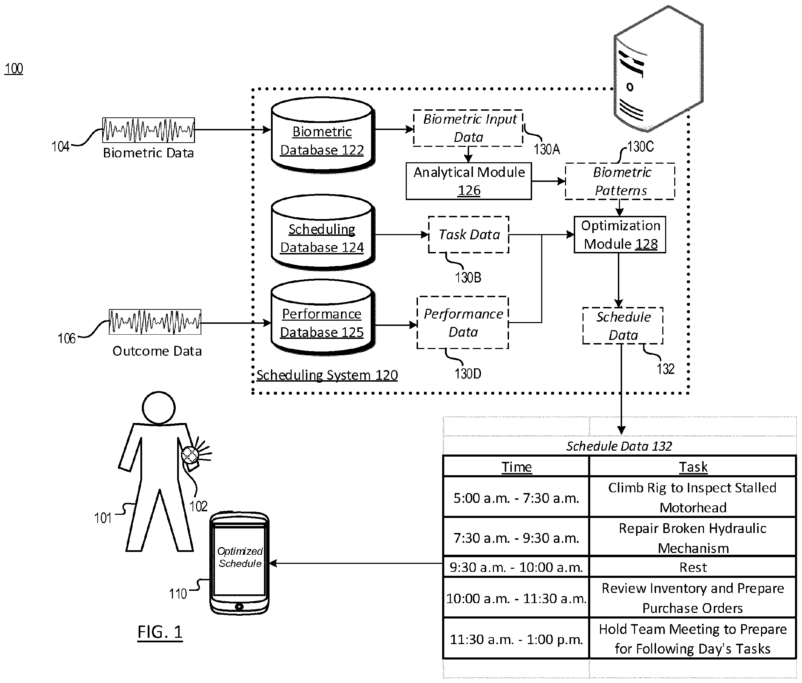

FIG. 1 illustrates an example environment 100 that allocates outstanding tasks to employees of an enterprise based on collected biometric data. Environment 100 may, in some aspects, include a sensor device 102, a client device 110, and a scheduling system 120, which may be interconnected through any appropriate combination of communications networks, e.g., a wireless local area network (LAN), e.g., a "WiFi" network, a RF network, a Near Field Communication (NFC) network, a wireless Metropolitan Area Network (MAN) connecting multiple wireless LANs, and a wide area network (WAN), e.g., the Internet.

In some aspects, sensor device 102 may be associated with a user, e.g., user 101, and may include one or more biometric sensors configured to capture data, e.g., biometric data, indicative of a physiological state of user 101, and further, additional components that store the captured biometric data and transmit portions of captured biometric data to scheduling system 120 at various temporal intervals. By way of example, sensor device 102 may detect and capture data identifying a heart rate of user 101, a respiration rate of user 101, a blood pressure of user 101, a body temperature of user 101, a skin conductance of user 101, electrical activity of user 101's brain (e.g., EEG data), and other physiological and bio-mechanical characteristics of user 101, such as a rate of blinking, metrics indicative of user 101's posture, metrics indicative of a position of user 101's head, data characterizing user 101's sleep patterns, data characterizing a location of user 110, and accelerometer or gyroscopic data characterizing a motion of user 101's body. Further, in some examples, sensor device 102 may include, but is not limited to, a wearable device, a smart watch or wristband (e.g., an Apple Watch^{™} or a Fitbit^{™} wristband), an optical head-mounted display unit (e.g., Google Glass^{™}), smart fabrics having embedded electrical and sensor components (e.g., Sensoria^{™} socks), and any additional or alternate communications device, such as a smart phone, capable of capturing biometric data characterizing user 101's physiological state and transmitting that biometric data to scheduling system 120.

In some instances, user 101 may be an employee of an enterprise that maintains and operates scheduling system 120. For example, the enterprise may include, but is not limited to, a petrochemical company that operates various oil rigs having facilities to drill oil wells, extract and process oil, and further, store the extracted and processed oil prior to transport to a refinery. User 101's position within the petrochemical company may require user 101 to, among other things, climb portions of the oil rigs, examine and repair various pieces of equipment, such as motor heads and hydraulic mechanisms, review available inventory and purchase orders, and conduct and participate in meetings to plan and prepare for various tasks. As these tasks may require different levels of physical exertion and mental awareness, scheduling system 120 may analyze stored biometric data to characterize and predict user 101's physical and mental state during various time periods throughout a workday, and may assign certain tasks to user 101 for completion that are consistent with user 101's physical and mental state during certain portions of the workday.

For example, in FIG. 1, sensor device 102 may include a wearable device, such as a smart watch work by user 101, and sensor device 102 may detect and store biometric data indicative of user 101's heart rate, rate of respiration, blood pressure, and/or other physiological parameters. The stored biometric data may be indicative of a current or a past biometric characteristic of user 101, such as user 101's level of stress, user 101's level of physical or mental fatigue, or a level of alertness or focus exhibited by user 101. In some aspects, sensor device 102 may transmit portions of the stored biometric data, e.g., biometric data 104, to scheduling system 120 at predetermined, regular time intervals or in response to certain scheduled events, such as a starting time of user 101's workday or upon a completion of user 101's workday.

In some aspects, scheduling system 120 may receive biometric data 104, which may be transmitted from sensor device 102 across any of the communications networks described above. For example, biometric data 104 may include, but is not limited to, one or more portions of the biometric data captured and stored by sensor 102, temporal data indicating a time or date at which sensor device 102 captured each of the biometric data portions, an identifier of sensor device 102, and an identifier of user 101, such as an employee identifier established by the enterprise.

In further implementations, scheduling system 120 may determine or detect additional portions of biometric data 104 based on information received from or collected by non-biometric sensor devices and other devices and computing systems in communications with scheduling system 120 across any of the networks described above. In some instances, scheduling system 120 may receive digital video data that captures a movement of user 101's body at various times and dates, and based on an application of one or more image processing techniques to the received digital video data, scheduling system 120 may identify one or more of the biometric and physiological characteristics described above. For example, based on portions of the received digital image data, scheduling system 120 may derive a respiration rate of user 101 at the various times and dates, a rate of blinking at the various times and dates, and/or a position of user 101's head at the various times and dates.

Scheduling system 120 may, in certain implementations, store the received, detected, or derived portions of biometric data 104 within one or more structured data records of a data repository, such as biometric database 122. Further, in some aspects, biometric database 122 may store biometric data captured by sensor device 102 at various intervals throughout one or more prior time periods, such as prior workdays or portions of prior workdays, and each of the structured data records may be associated with user 101 and/or sensor device 102 through the corresponding identifiers. Biometric database 122 may also store biometric data captured by additional or alternate sensors device during these and other prior time periods. For example, the enterprise associated with scheduling system 120 may support many employees in various positions, and at least a portion of these employees may wear, hold, or operate additional sensor devices that capture biometric data indicative of physiological states of these employees during corresponding time intervals. These additional sensor devices may transmit the biometric data to scheduling system 120 at various intervals throughout the employees' workdays, and biometric database 122 may store the biometric data captured by these additional sensor 102 in corresponding data records using any of the exemplary processes described above.

Scheduling system 120 may also store scheduling data associated with user 101 and/or other employees of the enterprise within portions of the data repository, e.g., scheduling database 124. In certain implementations, scheduling database 124 may include data records that identify, among other things, one or more tasks currently assigned to user 101 and/or other employees during a current workday or during one or more prior workdays, portions of the current or prior workday allocated to a completion of the assigned tasks, and additionally or alternatively, one or more outstanding tasks requiring assignment to user 101 and/or the other employees during the current workday.

In some aspects, a "task" may refer to a specific action or combination of related actions that, when performed by user 101 and/or the other employees, achieves a goal specified by the enterprise. The tasks assigned to user 101 and/or the other employees may vary in scope, complexity, and risk of failure and injury. For example, user 101 may be employed as a oil-rig operator by the a petrochemical company, and the tasks assigned to user 101 may include complex and dangerous tasks, such as climbing oil rights to inspect and repair inaccessible machinery (e.g., motor heads and hydraulic mechanisms), as well as relatively mundane, low-risk tasks such as reviewing inventory, preparing purchase orders, and organizing team meetings in preparation of scheduled tasks. To characterize these variations, scheduling system 120 may generate a metric indicative of a level of complexity and risk associated with each of the tasks assigned or awaiting assignment to user 101 and/or the other employees, and store data indicative of the established metrics within scheduling database 124.

The established metric may, in some instances, correspond to a numerical score, e.g., a task score, and a magnitude of the task score established for a particular task may indicate a complexity and a level of risk of failure or injury associated with the particular task. By way of example, the numerical task score may range from zero (e.g., minimal complexity and risk) to three (e.g., high complexity and risk), and scheduling system 120 may establish task scores of three for the rig climbs and repairs to the inaccessible machinery to reflect their highly complex and dangerous nature. Similarly, for example, scheduling system 120 may establish a task score of two for the tasks of reviewing inventory and preparing purchase orders to reflect their less complex nature, and a task score of unity for the preparation of paperwork, which is associated with minimal complexity and risk. The disclosed implementations are, however, not limited to these examples of task scores, and in other implementations, scheduling system 120 may establish any additional or alternate task score that would be appropriate to the enterprise and to the tasks.

Referring back to FIG. 1, scheduling system 120 may analyze portions of the stored biometric data captured by sensor device 102 during the prior time periods, a current time period, and/or in real-time to identify time-varying patterns in user 101's physiological state during these prior time periods and to predict biometrics characteristics of user 101 during one or more future time periods. For example, the biometric characteristics may include, but are not limited to levels of stress, fatigue, mental focus, and other physical or mental manifestations of user 101's physiological state, as described above.

In one aspect, scheduling system 120 may obtain, from biometric database 122, portions of the stored biometric data characterizing user 101's physiological state during one or more prior time periods, and may input the obtained portions of the stored biometric data to analytical module 126 (e.g., as biometric input data 130A). In additional aspects, biometric input data 130A may also include biometric data that characterizes user 101's physiological state during a current time and additionally or alternatively, that represents a real-time characterization of user 101's physiological state. For example, scheduling system 130A may obtain portions of biometric input data 130A that characterize user 101's physiological state during the current workday from biometric database 122 and/or may incorporate portions of received biometric data 104 directly into input biometric data 130A without prior storage within biometric database 122.

In some aspects, analytical module 126 may apply, without user input, one or more analytical processes to input biometric data 130A and to additional stored data correlating user 101's biometric data to particular biometric characteristics, such as levels of stress, fatigue, and mental focus. In some aspects, the applied analytical processes may include one or more machine learning algorithms, one or more algorithmic or research-based techniques, and one or more probabilistic techniques, such as data mining techniques and other techniques that analyze and leverage "big data." The applied machine learning algorithms, algorithmic or research-based techniques, and/or probabilistic techniques may detect time-varying patterns in user 101's biometric data during these prior workdays, and additionally or alternatively, time-varying patterns of user 101's stress levels, fatigue levels, levels of mental focus, and other biometric characteristics during the prior and current workdays, and generate output data indicative of the detected patterns.

By way of example, biometric input data 130A may include measurements of user 101's active heart rate, resting heart rate, and body temperature captured by sensor device 102 at fifteen minutes intervals during the prior workdays. Analytical module 126 may, in some instances, apply the one or more machine learning algorithms to input biometric data 130A and the additional stored data to detect the time-varying patterns in heart rate, body temperature, and the particular biometric characteristics of user 101 during the prior workdays, which may be predictive of time-varying patterns in heart rate, body temperature, and the particular biometric characteristics user 101 in future workdays of similar duration.

For example, each of the prior eight-hour workdays may range from 5:00 a.m. to 1:00 p.m., and the application of the machine-learning algorithms, the algorithmic or research-based techniques, and/or the probabilistic techniques to input biometric data 130 may indicate that, during the prior workdays: (i) user 101's heart rate exhibits less than a 10% deviation from user 101's resting heart rate between 5:00 a.m. and 9:30 a.m.; (ii) user 101's heart rate exhibits greater than a 20% deviation from the resting heart rate between 9:30 a.m. and 10:00 a.m.; (iii) user 101's heart rate exhibits not more than a 15% deviation from the resting heart rate between 10:00 a.m. and 11:30 a.m.; and (iv) user 101's heart rate exhibits not more than a 10% deviation from user 101's resting heart rate and between 11:30 a.m. and 1:00 p.m. Based on these detected trends, and on the additional stored data characterizing user 101's levels of stress, fatigue, and mental focus during one or more of the prior workdays, the machine learning algorithms may establish trends indicating that user 101's fatigue and stress and at a low level between 5:00 a.m. and 9:30 a.m., are at a high level between 9:30 a.m. and 10:00 a.m., and return to moderate levels between 10:00 a.m. and 1:00 p.m. Similarly, the machine-learning algorithms may also establish trends indicating that user 101's mental focus is at a high level between 5:00 a.m. and 9:30 a.m., at a low level between 9:30 a.m. and 10:00 a.m., and returns to a moderate level between 10:00 a.m. and 1:00 p.m. The disclosed implementations are not limited to these examples of trends, biometric data, and biometric characteristics, and in other implementations, analytical module 126 may apply the one or more machine learning algorithms, algorithmic or research-based techniques, and/or probabilistic techniques to identify any additional or alternate pattern appropriate to user 101, the tasks, and the enterprise.

Additionally, in some aspects, analytical module 126 may generate metrics, e.g., biometric scores, indicative of user 101's physiological state during portions of the prior workdays. For instance, based on the detected trends in user 101's biometric characteristics, such as levels of stress, fatigue, or mental focus, analytical module 126 may assign biometric scores indicative of these biometric characteristics during corresponding portions of a current workday. In additional instances, analytical module 126 may establish aggregate metrics, e.g., aggregate biometric scores, indicative of aggregate levels of stress, fatigue, and mental focus experienced by user 101 during the corresponding portions of the current workday. By way of example, the aggregate metric for a particular one of the workday portions, e.g., 5:00 a.m. and 9:30 a.m., may represent an average of the biometric scores for stress, fatigue, and mental-focus levels during that workday portion, a weighted average that favors one or more of the stress, fatigue, or mental-focus scores, or any additional or alternate combination appropriate to the enterprise and the tasks.

For example, the detected patterns indicate that, between 5:00 a.m. and 9:30 a.m., user 101's levels of stress and fatigue are at a low level, and user 101's level of focus is at a high level. Based on these detected patterns, analytical module 126 may assign an aggregate biometric score of unity to the workday period between 5:00 a.m. and 9:30 a.m., which may indicate that user 101's levels of stress, fatigue, and mental-focus are especially conducive to the performance of complex, high-risk tasks. In contrast, the detected patterns indicate that, between 9:30 a.m. and 10:00 a.m., user 101's levels of stress and fatigue are at a high level, and user 101's level of focus is at a low level. Analytical module 126 may, in some aspects, assign an aggregate biometric score of three to the workday period between 9:30 a.m. and 10:00 a.m., which may indicate that user 101's stress, fatigue, and mental-focus levels are at most appropriate to tasks having little or no complexity or risk. Further, analytical module 126 may assign an aggregate biometric score of two to the workday period between 10:00 a.m. and 1:00 p.m., which may be indicate the moderate levels of stress, fatigue, and mental-focus levels experienced by user 101.

In other aspects, the established aggregate biometric scores may be user-specific, and may reflect aggregate levels of stress, fatigue, and mental focus experienced by corresponding additional users during a particular time period. For example, as described above, biometric database 122 may store data indicative of biometric characteristics, such as heart rate, respiration rate, or body temperature, of a plurality of employees of the enterprise, such as those assigned to one or more teams. Further, using any of the exemplary processes described above, analytical module 126 may detect or derive time-varying patterns within the stored biometric data (e.g., heart rate, body temperature, and biometric characteristics, such as levels of stress, fatigue, and mental focus) of a subset of these employees over the prior or current workdays. Furthermore, and using any of the exemplary processes described above, analytical module 126 may also generate biometric scores and/or the aggregate biometric scores that characterize the physiological state of each of the employees during periods of the prior or current workdays.

Referring back to FIG. 1, analytical module 126 may generate output data, e.g., biometric pattern data 130C, that identifies the detected time-varying patterns (e.g., in user 101's heart rate, body temperature, and/or biometric characteristics, such as levels of stress, fatigue, and mental focus). Biometric pattern data 130C may, in some instances, also include data identifying the biometric scores and/or the aggregate biometric scores that characterize user 101's physiological state during periods of the prior workdays. Further, in certain aspects, scheduling system 120 may also obtain task data, e.g., task data 130B, that identifies one or more outstanding tasks requiring completion during a current workday from scheduling database 124. As described above, task data 130B may also include one or more task scores indicative of a complexity and risk of corresponding ones of the tasks.

In certain aspects, an optimization module of scheduling system 120, e.g., optimization engine 128, may receive task data 130B and biometric pattern data 130C. Based on task data 130B and biometric pattern data 130C, optimization module 128 may generate an optimized schedule for user 101 that matches a complexity and risk of each of the assigned tasks with a level of stress, fatigue, and/or mental focus experienced by user 101 during corresponding portions of the current workday. In some aspects, optimization module 128 generate the optimized schedule for user 101 based on an application of one or more optimization processes to portions of task data 130B and biometric pattern data 130C. For example, the one or more optimization processes may include, but are not limited to, one or more machine learning techniques, one or more algorithmic or research-based techniques, and one or more probabilistic techniques, such as data mining techniques and other techniques that analyze and leverage "big data." By matching the complexity and risk associated with a task to the level of stress, fatigue, and/or mental focus experienced by the user throughout the workday, the generated schedule may optimize an efficiency of user 101 in completing the assigned tasks while minimizing a risk of injury or failure due to fatigue, excessive stress, or reduced mental focus.

For example, task data 130B may identify outstanding tasks that include, but are not limited to, a rig climb to inspect a stalled motorhead, repairing a broken hydraulic mechanism, reviewing inventory and preparing purchase orders, conducting a meeting to plan and prepare for a next day's tasks, and a mandated rest period. Task data 130B may also identify expected completion times associated with the outstanding tasks. For example, task data 130B may specify an expected completion time of 2.5 hours for the rig climb, an expected completion time of 2.0 hours for the repair of the broken hydraulic mechanism, an expected completion time of 1.5 hours for the review of the inventory and the preparation of the purchase orders, an expected completion time of 1.5 hours for the meeting to plan and prepare for the next day's tasks, and a mandated rest period of 0.5 hours.

Further, and as described above, task data 130B may also include one or more task scores that reflect a level of risk and complexity of each of the outstanding tasks. For example, task data 130B may specify a task score of three to the rig climb and to the repair of the broken or malfunctioning hydraulic mechanism, which indicates these outstanding tasks are especially complex and risk. Task data 130B may also specify a task score of two to the meeting to plan and prepare for the next day's tasks, and a task score of unity to the review of the inventory and the preparation of the purchase orders, which indicate a decreasing level of associated risk and complexity. Additionally, task data 130B may establish a task score of zero for the mandatory rest period, which indicates a lack of complexity or risk.

Additionally, in some instances, biometric pattern data 130C may identify the detected time-varying patterns in user 101's biometric characteristics, such as levels of stress, fatigue, and mental focus, and may specify the aggregate biometric scores that characterize user 101's physiological state during portions of the prior workdays. For example, as described above, biometric pattern data 130C may specify that user 101 experiences a low level of fatigue and stress, and a high level of mental focus, for workday portions between 5:00 a.m. and 9:30 a.m., that user 101 experiences a high level of fatigue and stress, and a low level of mental focus, for workday portions between 9:30 a.m. and 10:00 a.m., and that user 101 experiences moderate levels of fatigue, stress, and metal focus between 10:00 a.m. and 1:00 p.m. As described above, biometric pattern data 130C may include an aggregated biometric score of unity for workday portions between 5:00 a.m. and 9:30 a.m., an aggregated biometric score of three for workday portions between 9:30 a.m. and 10:00 a.m., and an aggregated biometric score of two for workday portions between 10:00 a.m. and 1:00 p.m.

In certain implementations, and based on task data 130B and biometric pattern data 130C, optimization module 128 may generate an optimized schedule for completing the outstanding tasks assigned to user 101 during a current workday of known length, e.g., eight hours. Optimization module 128 may, in some aspects, generate candidate assignments of each of the outstanding tasks to a corresponding time slot within the work day, and each of the candidate assignments may be characterized by a risk score. For each of the candidate assignments, the corresponding risk score may represent a product of a task score associated with the corresponding task and an aggregated biometric score associated with the corresponding time slot, and may vary depending on a disposition of the corresponding time slot within the work day.

For example, the task of repairing the broken hydraulic mechanism may be associated with a task score of three and an expected completion time of two hours. In some instances, a first candidate assignment of the task to a portion of the workday between 5:00 a.m. and 7:00 a.m. may result in a risk score of three (e.g., a product of the task score of three and the aggregate biometric score of unity), while a second candidate assignment task to a portion of the workday between 11:00 a.m. and 1:00 p.m. may result in a risk score of six (e.g., a product of the task score of three and the aggregate biometric score of two).

Optimization module 128 may further generate multiple combinations of the candidate assignments that would enable user 101 to complete the outstanding tasks within the current workday. Each of the multiple combinations may be associated with a corresponding aggregated risk score, which may represent a sum of the risk scores associated with each of the constituent candidate assignments, as described above. In some implementations, optimization module 128 may establish, as the optimized schedule, a corresponding one of the multiple combinations associated with a minimum of the aggregated risk scores. Additionally, in some aspects, optimization module 128 may constrain the value of the minimized aggregated risk score, and may perform additional or alternate optimization processes to assign outstanding tasks to available time slots in a manner that generates an optimized schedule having an aggregated risk score that falls blow a threshold value, or that falls within an established range of risk scores.

In some aspects, optimization module 128 may generate data identifying the optimized schedule, e.g., schedule data 132, which may be transmitted to client device 110 across the network. Schedule data 132 may include, but is not limited to, data identifying each of the tasks assigned to user 101 for completion during the current workday, and data identifying the corresponding time slots to which optimization engine 128 assigned the outstanding tasks. For example, as described above, the outstanding tasks include the rig climb to inspect the stalled motorhead, the repair of the broken hydraulic mechanism, the review of the inventory and the preparation of the purchase orders, the meeting to plan and prepare for the next day's tasks, and the mandated rest period. Based on the complexity and risk associated with these tasks, and the physiological condition of user 101 during prior workdays, optimization module 128 may assign the rig climb to inspect the stalled motorhead for completion between 5:00 a.m. and 7:30 a.m., may assign the repair of the broken hydraulic mechanism for completion between 7:30 a.m. and 9:30 a.m., may assign the review of the inventory and the preparation of the purchase orders between 10:00 a.m. and 11:30 a.m., and may schedule the meeting to plan and prepare for the next day's tasks between 11:30 a.m. and 1:00 p.m. Further, given the excessive levels of stress and fatigue that user 101 is expected to experience between 9:30 a.m. and 10:00 a.m., optimization module 128 may assign a mandatory break to user 101 between 9:30 a.m. and 10:00 a.m.

Optimization module 128 may also perform operations that store portions of schedule data 132, along with additional data identifying user 101 and the current workday, within one or more data records of scheduling database 124. The stored portions of schedule data 132 may, in some aspects, specify the outstanding tasks assigned for completion by user 101 during the current workday and the time periods during which the user is scheduled to complete the assigned tasks. For example, and as described above, the stored portions of scheduling data 132 may identify the scheduled rest period between 9:30 a.m. and 10:00 a.m. on the current workday, and may specify that user 101 is scheduled to complete the rig climb between 5:00 a.m. and 7:30 a.m. on the current workday, to complete the repair of the broken hydraulic mechanism between 7:30 a.m. and 9:30 a.m. on the current workday, to complete the review of the inventory and the preparation of the purchase orders between 10:00 a.m. and 11:30 a.m. on the current workday, and to conduct the meeting to plan and prepare for the next day's tasks between 11:30 a.m. and 1:00 p.m. on the current workday.

Additionally, in certain aspects, optimization module 128 (or any other module of scheduling system 120) may perform operations that store data specifying the task scores for each of the assigned tasks and the aggregate biometric scores of user 101 during each of the scheduled time periods within one or more data records of scheduling database 124, and further, that link the stored task and aggregated biometric scores to user 101, the current workday, and to the stored portions of schedule data 132. By way of example, and as described above, optimization module 128 may store, within scheduling database 112, data specifying task scores of three for the scheduled rig climb and the repairs to the broken hydraulic mechanism, a task score of two for the scheduled meeting, a task score of unity for the scheduled review of inventory and preparation of purchase orders, and a task score of zero for the scheduled rest period. Further, and in some instances, optimization module 128 may store data that specifies the assignment of the aggregated biometric score of unity to the portion of the current workday between 5:00 a.m. and 9:30 a.m., the aggregated biometric score of three to the portion of current workday between 9:30 a.m. and 10:00 a.m., and the aggregated biometric score of two to the portion of the current workday between 10:00 a.m. and 1:00 p.m., as described above. These stored task scores and aggregated biometric score may, in some instances, be linked within scheduling database 124 to the stored portions of schedule data 132 and further, to stored data identifying user 101 and the current workday.

Referring back to FIG. 1, client device 110 may receive schedule data 132, and may render portions of optimized scheduling data presentation with a corresponding display unit, such as a touchscreen display. In certain aspects, user 101 may review the presented scheduling data prior to a scheduled shift, and may initiate a performance of the first scheduled task, e.g., the rig climb to inspect the stalled motorhead, at 5:00 a.m., and may perform the remaining scheduled tasks throughout the current workday in accordance with the presented scheduling data.

In some implementations, as described above, optimization module 128 may generate an optimized schedule of assigned tasks for user 101 that matches a complexity and risk of each of the assigned tasks with an expected level of stress, fatigue, and/or mental focus during corresponding portions of a current workday. While the optimized schedule may reduce a risk of injury or failure due to fatigue, excessive stress, or reduced mental focus, the optimized schedule may not address certain external or environmental factors that impact the completion of the assigned tasks by user 101. Further, and in other instances, user 101 may perform certain ones of the assigned tasks more efficiently under user-specific levels of stress or mental focus (e.g., user 101's mental focus may be heightened under levels of stress and user 101 may perform difficult tasks more efficiently when experiencing a heightened level of stress). In some aspects, the processes described above may not effectively capture or account for these user-specific, external and/or environmental conditions.

In additional implementations, optimization module 122 may further optimize the schedule of assigned tasks during a current workday based on performance data that characterizes a performance of various tasks by user 101 (and additionally or alternatively, other employees of the enterprise) during corresponding portions of one or more prior workdays. By generating the optimized schedule of assigned tasks during the current workday based not only on task data 130B and biometric pattern data 130C, but also on portions of the performance data, optimization module 128 may account for the user-specific, external and/or environmental conditions described above, and schedule the assigned tasks during portions of the current workday in a manner that maximizes a speed and an efficiency at which user 101 completes the assigned tasks while minimizing the risk of injury or failure due to fatigue, excessive stress, or reduced mental focus.

In certain aspects, scheduling system 120 may receive data, e.g., outcome data 106, that characterizes a performance of user 101 during a completion of various assigned tasks during prior workdays. Outcome data 106 may, for example, include one or more performance metrics that characterize a speed, efficiency, and/or an efficacy at which user 101 completed the various assigned tasks during the prior workdays. These performance metrics may include task-neutral metrics, such as a total time required by user 101 to complete one or more of the assigned tasks and a comparison of that total time to an expected completion time for the one or more assigned tasks, a productivity of user 101, or a rate of error, and additionally or alternatively, task-specific metrics, such as an operational characteristic of a particular repaired component or a rate of subsequent failure of the particular repaired component. Outcome data 106 may also include additional data that links subsets of the performance metrics to user 101, to corresponding ones of the assigned tasks, and to the scheduled time periods and prior workdays associated with the corresponding ones of the assigned tasks. Additionally, in some instances, portions of outcome data 106 may be generated and transmitted to scheduling system 120 by a computing device operation by a manager that monitors user 101's performance, a computing device operated by a peer of user 101 within the enterprise, by communications device 110 (e.g., based on input received from user 101), and/or by one or more sensor devices configures to detect and capture data indicative of one or more of the performance metrics.

In certain aspects, scheduling system 120 may receive outcome data 106, as described above, and may store portions of outcome data 106 within data records of a structured data repository, such as performance database 125. For example, scheduling system 120 may aggregate and store portions of outcome data 106 within performance database 125 on a task-specific basis. In some aspects, scheduling system 120 may also link the task-specific portions of outcome data 106 (e.g., which identify corresponding ones of the assigned tasks, and the time periods and prior workdays during which user 101 completed the assigned tasks) to task scores and to aggregated biometric scores associated with the corresponding ones of the assigned tasks, user 101, and corresponding ones of the time periods and prior workdays (e.g., as maintained within scheduling database 124). For example, each of the stored, task-specific portions of outcome data 106 may identify an assigned task, such as a prior rig climb, may identify time periods on one or more prior workdays during which user 101 completed the assigned task, and further, may be linked to a task score associated with the assigned task and to aggregated biometric scores associated with the time periods on the prior workdays.

In some aspects, optimization module 128 may access portions of the stored performance data, and in conjunction with data identifying one or more outstanding tasks requiring completion during a current workday and expected time-varying patterns in user 101's biometric characteristics during the current workday, establish an optimized schedule that maximizes the performance of user 101 in completing the outstanding tasks while minimizing the risk of injury or failure due to fatigue, excessive stress, or reduced mental focus.

Further, and as described above, optimization module 128 may access task data 130B, which identifies the outstanding tasks requiring completion during the current workday, and biometric pattern data 130C, which identifies the expected time-varying patterns in user 101's biometric characteristics during the current workday. Optimization module 128 may also access performance database 125 and identify portions of the stored performance data that characterize user 101's performance of the identified outstanding tasks during time periods of prior workdays, and additionally or alternatively, that characterize user 101's performance of tasks similar to the outstanding tasks (e.g., having task scores comparable to those of the outstanding tasks) during time periods of the prior workdays. In some aspects, optimization module 128 may obtain the identified potions of the stored performance data as performance data 130D, which may include, for each of the outstanding and/or similar tasks, one or more performance metrics, the corresponding time period and prior workday, and/or the linked task score and aggregated biometric score.

Optimization module 128 may apply any of the optimization processes described above, including one or more machine learning algorithms, research-based or algorithmic techniques, and probabilistic techniques, to portions of task data 130B, biometric pattern data 130C, and performance data 130D. In certain aspects, and based on the application of these optimization processes, optimization module 128 may establish the optimized schedule for completing the one or more outstanding tasks within the current workday in a manner that maximizes the performance of user 101 while minimizing the risk of injury or failure due to fatigue, excessive stress, or reduced mental focus.

For example, the outstanding tasks may include a rig climb to inspect a stalled motorhead, and performance data 130D may indicate that user 101 performed rig climbs of similar complexity (e.g., having a task score of three) on prior workdays between 5:00 a.m. and 7:30 a.m., and between 7:00 a.m. and 9:30 a.m. Performance data 130D may also specify aggregated biometric scores of unity for user 101 during these time periods on the prior workdays, which indicate that user 101's levels of stress, fatigue, and mental-focus are especially conducive to the performance of complex, high-risk tasks during these time periods, but may include performance metrics indicating that user 101 performed the similar rig climbs more rapidly and more effectively between 5:00 a.m. and 7:30 a.m. than between 7:00 a.m. and 9:30 a.m.

As described above, biometric pattern data 130C may specify aggregated biometric scores of unity for the time period between 5:00 a.m. and 9:30 a.m. on the current workday, and task data 130B may specify a task score of three for the outstanding rig climb to inspect the stalled motorhead, which corresponds to the task scores associated with the similar rig climbs performed by user 101 on the prior workdays. In some aspects, and based on the application of the one or more optimization processes described above to performance data 130D, optimization module 128 may schedule the completion of the outstanding rig climb to inspect the stalled motorhead between 5:00 a.m. and 7:30 a.m. on the current workday, which optimization engine 128 may determine is likely to improve the speed and efficiency of user 101 during the performance of the task. In some aspects, optimization module 128 may establish schedule data 132 that identifies the optimized schedule, and scheduling system 120 may provide schedule data 132 to client device 110 using any of the processes described above.

Using these techniques, a scheduling system maintained by an enterprise may optimally allocate tasks within an enterprise to one or more employees based on collected biometric data that characterizes not only the employees' current physiological state, but temporal variations in the biological characteristics of the employees throughout prior workdays. The scheduling system may, in some aspects, continuously collect biometric data captured by sensor devices worn, held, or operated by employees of the enterprise, and may apply machine learning techniques, research-based algorithms, and/or probabilistic techniques to the collected biometric data to identify not only time-varying patterns in the biometric data, such as heat rate, but also time-varying patterns in biometric characteristics, such as levels of stress, fatigue, or mental focus. By matching tasks to an expected or actual physiological state of an employee, the scheduling system may minimize a risk of injury resulting from potential mismatches between the complexity of allocated tasks and an actual level of fatigue, stress, limited mental focus experienced by the employee. Additionally, in certain aspects, the scheduling system may collect performance data characterizing the employee's performance of various tasks throughout prior workdays, and based on the collected performance data, establish an optimized schedule that maximize a speed and efficiency of the employee's performance of while minimizing the risks of injury due to the experienced levels of level of fatigue, stress, limited mental focus.

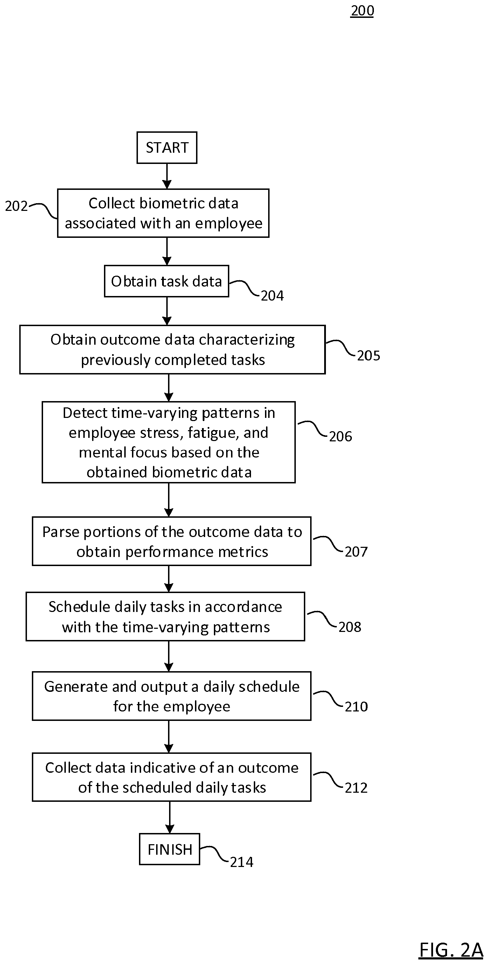

FIG. 2A is a flowchart of an example process 200 for allocating tasks to an employee for completion based on collected biometric data characterizing the employee's physiological condition. In certain aspects, a computer system (e.g., scheduling system 120) may perform the steps of example process 200. For example, scheduling system 120 may obtain task data identifying one or more tasks assigned to a user for completion within a predetermined time period, may obtain biometric data captured by one or more biometric sensors of the user during prior time periods, may obtain performance data characterizing a completion of tasks by the user during the prior time periods, may apply one or more machine-learning algorithms, research-based or algorithmic techniques, and probabilistic techniques to detect time-varying patterns in biometric characteristics of the user during the prior time periods, and may determine a schedule for completing the tasks during the predetermined time period that is consistent with the task scores and the detected time-varying patterns.

In some aspects, scheduling system 120 may collect and store data indicative of a physiological state of a user, such as user 101 (e.g., in step 202). For example, user 101 may be associated with a sensor device having one or more biometric sensors, e.g., sensor device 102. As described above, sensor device 102 may include one or more biometric sensors configured to capture data indicative of a physiological state of user 101, and further, additional components that store the captured biometric data and transmit portions of captured biometric data to scheduling system 120 at various temporal intervals. By way of example, sensor device 102 may detect and capture data identifying a heart rate of user 101, a respiration rate of user 101, a blood pressure of user 101, and/or a body temperature of user 101. In some aspects, scheduling system 120 may receive the biometric data transmitted from sensor device 102, and may store the received biometric data 104 within a portion of a data repository, such as biometric database 122, as described above.

Scheduling system 120 may also obtain data, e.g., task data, that identifies one or more outstanding tasks currently assigned to user 101 for completion during a current workday (e.g., in step 204). By way of example, scheduling system 120 may obtain the task data from one or more data repositories, e.g., scheduling database 120, and the obtained task data may also include metrics, e.g., task scores, indicative of a complexity and a level of risk of failure or injury associated with the corresponding ones of the tasks, as described above.

Furthermore, scheduling system 120 may obtain data, e.g., performance data, that characterizes a performance of the one or more tasks by user 101 during corresponding time periods on prior workdays (e.g., in step 205). As described above, scheduling system 120 may access one or more data repositories, e.g., performance database 125, and may identify portions of the stored data that characterize the performance of the one or more outstanding tasks by user 101 during the corresponding time periods on the prior workdays and additionally or alternatively, that characterize the performance of tasks similar to the outstanding tasks (e.g., tasks having a comparable task score) by user 101 during the corresponding time periods on the prior workdays. Scheduling system 120 may, in some instances, obtain the identified portions of the stored data as the performance data in step 205, and the performance data may include, but us not limited to, performance metrics that characterize a speed and efficacy at which user 101 completed the outstanding and/or similar tasks, and data identifying user 101, the corresponding time periods, and the prior workdays, and further, the linked task scores and aggregated biometric scores associated with each of the outstanding and/or similar tasks, with user 101, and with the corresponding time periods and prior workdays.

In certain aspects, scheduling system 120 may analyze portions of the obtained biometric data to identify time-varying patterns in the biometric data (e.g., heart rate, etc.) and in derived biometric characteristics (e.g., levels stress, fatigue, mental focus, etc.) during these prior time periods, and to predict a physiological state of user 101 during one or more future time periods (e.g., in step 206). For example, using any of the exemplary processes described above, scheduling system 120 may apply, without user input, one or more machine learning algorithms, algorithmic or research-based techniques, and probabilistic techniques to the obtained biometric data, and may detect time-varying patterns in user 101's biometric data during these prior workdays, and additionally or alternatively, time-varying patterns of user 101's stress levels, fatigue levels, levels of mental focus, and other biometric characteristics during the prior workdays. Additionally, in step 306, scheduling system may generate metrics, e.g., biometric scores, indicative of levels of stress, fatigue, and mental focus experienced by user 101 during the corresponding workday portions using any of the exemplary processes described above.

Additionally, in some aspects, scheduling system 120 may parse the performance data to extract performance metrics associated with the outstanding and/or similar tasks, completed by user 101 during the corresponding time periods on the prior workdays (e.g., in step 207). Scheduling system 120 may also parse the performance data in step 207 to identify the task scores associated with each of the outstanding and/or similar tasks and further, aggregated biometric scores that characterize the levels of stress, fatigue, and/or mental focus experienced by user 101 during completion of the outstanding and/or similar tasks during the corresponding time periods on the prior workdays. For example, and based on the parsed performance data, scheduling system 120 may determine that user 101 performed rig climbs of complexity and risk similar to the outstanding rig climb (e.g., to inspect the stalled motorhead) between 5:00 a.m. to 7:30 a.m. and between 6:00 a.m. to 8:30 a.m. on prior workdays, and that user 101's levels of stress, fatigue, and mental focus were especially conducive to the performance of complex, high-risk tasks during these time periods on the prior workdays. The extracted performance metrics may, however, indicate user 101 perform the prior rig climbs more rapidly and effectively during the 5:00 a.m. to 7:30 a.m. time period than during the 6:00 a.m. to 8:30 a.m. time slot.

Based on the obtained task data, the detected trends in user 101's physiological condition during the prior workdays, and additionally or alternatively, the parsed performance data, scheduling system 120 may generate an optimized schedule for completing the outstanding tasks assigned to user 101 during a current workday of known length using any of the processes described above (e.g., in step 208). For example, and as described above, scheduling system 120 may generate candidate assignments of each of the outstanding tasks to a corresponding time slot within the work day, and each of the candidate assignments may be characterized by a risk score that represents a product of a task score associated with the corresponding task and an aggregated biometric score associated with the corresponding time slot. System 120 may also generate multiple combinations of the candidate assignments, each of which may be associated with a corresponding aggregated risk score that represents a sum of the risk scores associated with each of the combined candidate assignments.

In some aspects, scheduling system 120 may establish, as the optimized schedule in step 208, a corresponding one of the multiple combinations associated with a minimum of the aggregated risk scores. Additionally, as described above, scheduling system 120 may constrain the value of the minimized aggregated risk score, and may perform additional or alternate optimization processes to assign outstanding tasks to available time slots in a manner that generates an optimized schedule having an aggregated risk score that falls blow a threshold value, or that falls within an established range of risk scores.

Further, using any of the optimization processes described above, and based on the collected performance data, scheduling system 120 may assign one or more of the outstanding tasks to corresponding time slots that maximize a speed and efficacy of user 101's completion of the assigned outstanding tasks while minimizing the risks of injury due to the experienced levels of level of fatigue, stress, limited mental focus. For example, user 101 may be associated with an aggregated biometric score of unity during the time period between 5:00 a.m. and 9:30 a.m. on the current workday, which indicate that user 101's levels of stress, fatigue, and mental-focus are especially conducive to the performance of complex, high-risk tasks. Based on the application of one or more of the optimization processes described above to the parsed performance data, scheduling system 120 may determine that user 101 historically performs rig climbs more rapidly and efficiently during the 5:00 a.m. to 7:30 a.m. time slot than during the 7:30 a.m. to 9:30 a.m. time slot, and may assign the rig climb for completion during the 5:00 a.m. to 7:30 a.m. time period of the current workday and the repair of the broken hydraulic mechanism for completion during the 7:30 a.m. to 9:30 a.m. time period of the current workday.

In some aspects, scheduling system 120 may generate data identifying the optimized schedule, e.g., schedule data 132, which may be transmitted to client device 110 across the network (e.g., in step 210). Schedule data 132 may include, but is not limited to, data identifying each of the tasks assigned to user 101 for completion during the current workday, and data identifying the corresponding ones of the assigned time slots. Client device 110 may receive schedule data 132, and may render portions of optimized scheduling data presentation with a corresponding display unit, such as a touchscreen display. In certain aspects, user 101 may review the presented scheduling data prior to a scheduled shift, and may initiate a performance of the outstanding tasks in accordance with the optimized schedule.

Additionally, and as described above, scheduling system 120 may also receive and store data indicative of an outcome of the completion of one or more of the outstanding tasks by user 101 during corresponding time periods throughout the current workday (e.g., in step 212). For example, and as described above, the received outcome data may include one or more performance metrics that characterize a speed and an efficacy of user 101's completion of corresponding ones of the outstanding tasks during the current workday and additionally or alternatively, data identifying user 101, the corresponding outstanding tasks, and the corresponding time periods. In some aspects, in step 212, scheduling system 120 may store portions of the received outcome data within a portion of a structured data repository (e.g., performance database 125), and may link portions of the received outcome data with corresponding task scores and to corresponding aggregated biometric scores using any of the processes described. By linking the performance of user 101 during a completion of an outstanding task having a corresponding task score to a corresponding aggregated biometric score, scheduling system 120 may correlate performance metrics characterizing user 101's performance of a task having a known level of complexity and risk to a level of stress, fatigue, and/or mental focus experienced by user 101. Exemplary process 200 is then complete in step 214.

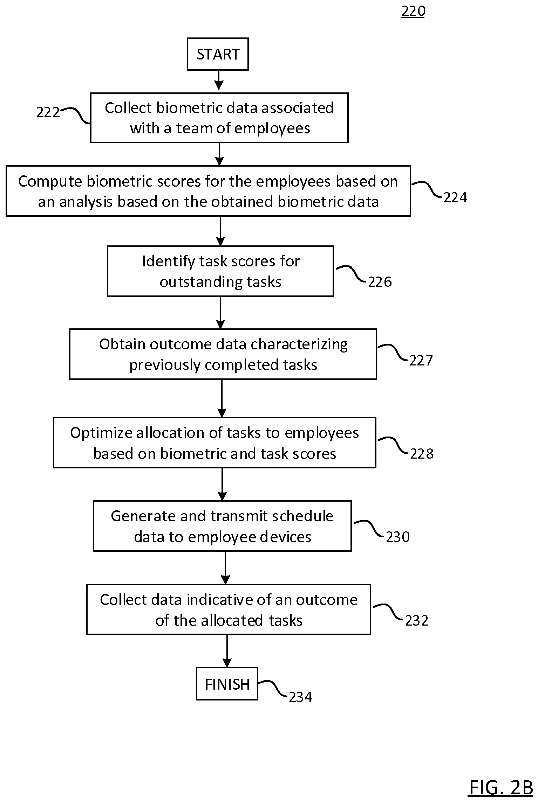

In certain implementations described above, a scheduling system, such as scheduling system 120, may generate an optimized schedule for the completion of tasks assigned to user 101 during a current workday. By matching the complexity and risk associated with each of these tasks to an expected level of stress, fatigue, and/or mental focus during a corresponding workday period, the generated schedule may optimize an efficiency of user 101 in completing the assigned tasks while minimizing a risk of injury or failure due to fatigue, excessive stress, or reduced mental focus. In further implementations, described below in reference to FIG. 2B, scheduling system 120 may assign one or more tasks scheduled for completion in a current workday to a plurality of employees, e.g., a team of employees within the enterprise, based matching a complexity and risk associated with each outstanding tasks with a level of level of stress, fatigue, and/or mental focus experienced by each of the employees.

FIG. 2B is a flowchart of an example process 220 for allocating tasks among a plurality of employees for completion based on collected biometric data characterizing the employees' physiological state. In certain aspects, a computer system (e.g., scheduling system 120) may perform the steps of example process 200. For example, scheduling system 120 may obtain task data identifying one or more outstanding tasks scheduled for completion during a current workday, may obtain biometric data associated with a team of employees during one or more prior workdays, may obtain performance data characterizing a completion of tasks by the employees during the prior workdays, may apply one or more machine-learning algorithms, research-based or algorithmic techniques, and probabilistic techniques to detect time-varying patterns in stress, fatigue, and mental focus during the prior workdays, and based on the task data and the detected time-varying patterns in the employees' stress, fatigue, and mental focus, may assign at least one of the tasks to each of the employees for completion within corresponding portions of the current workday.

In one aspects, scheduling system 120 may collect and store data indicative of a physiological state of a plurality of users, such as member employees of a team established by an enterprise (e.g., in step 222). For example, each of the employees may be associated with a sensor device having one or more biometric sensors, e.g., sensor device 102. As described above, the sensor devices may include one or more biometric data characterizing physiological states of the employees, and additional components that store the captured biometric data and transmit portions of captured biometric data to scheduling system 120 at various temporal intervals. By way of example, the biometric data may include, but are not limited to, a heart rate, a respiration rate, a blood pressure, and a body temperature of each of the employees. In some aspects, scheduling system 120 may receive the biometric data transmitted from the sensor devices, and may store the received biometric data within a portion of a data repository, such as biometric database 122, as described above.

In certain aspects, an analytical module of scheduling system 120, e.g., analytical module 126, may analyze portions of the obtained biometric data to identify time-varying patterns in biometric characteristics of the employees, such as levels of stress, fatigue, or mental focus, during these prior time periods and to predict a physiological state of each of the employees during one or more future time periods (e.g., in step 224). For example, and using any of the exemplary processes described above, scheduling system 120 may apply one or more machine learning algorithms, research-based or algorithmic techniques, and probabilistic techniques to the obtained biometric data, and may detect time-varying patterns in the employees' biometric characteristics during these prior workdays, and additionally or alternatively, time-varying patterns of the employee's stress levels, fatigue levels, levels of mental focus, and other biometric characteristics during the prior workdays.

Further, in step 224, scheduling system 120 may generate metrics, e.g., biometric scores, indicative of the physiological state of each of the employees during portions of the prior workdays. For instance, based on the detected patterns in the employees' levels of stress, fatigue, and/or mental focus during prior workdays, scheduling system 120 may assign biometric scores indicative of an expected stress, fatigue, and mental focus of each of the employees during corresponding portions of a current workday. In additional instances, using any of the exemplary processes described above, scheduling system 120 may establish aggregate metrics, e.g., aggregate biometric scores, indicative of aggregate levels of expected stress, fatigue, and mental focus experienced by each of the employees during the corresponding portions of the current workday.

Scheduling system 120 may also obtain data, e.g., task data, that identifies one or more outstanding tasks scheduled for completion during the current workday (e.g., in step 226). Scheduling system 120 may obtain the task data from one or more data repositories, e.g., scheduling database 120, and in some aspects, the obtained task data may also include metrics, e.g., task scores, associated with each of the outstanding tasks. As described above, a magnitude of the task scores for these outstanding tasks may be indicative of a complexity and a level of risk of failure or injury associated with each of the outstanding tasks, and in one example, the numerical task scores may range from zero (e.g., minimal complexity and risk) to three (e.g., high complexity and risk).

Scheduling system 120 may also obtain data, e.g., performance data, that characterizes an actual performance of the one or more tasks by the employees during corresponding time periods on prior workdays (e.g., in step 227). As described above, scheduling system 120 may access one or more data repositories, e.g., performance database 125, and may identify portions of the stored data that characterize the performance of the one or more outstanding tasks by the employees during the corresponding time periods on the prior workdays and additionally or alternatively, that characterize the employee's performance of tasks similar to the outstanding tasks (e.g., tasks having a comparable task score) during the corresponding time periods on the prior workdays. Scheduling system 120 may, in some instances, obtain the identified portions of the stored data as the performance data in step 227, and the performance data may include, but us not limited to, performance metrics that characterize a speed and efficacy at which the employees complete the outstanding and/or similar tasks, and data identifying the employees, the corresponding time periods and the prior workdays, and further, the linked task scores and aggregated biometric scores associated with each of the outstanding and/or similar tasks, each of the employees, and the corresponding time periods and prior workdays.

For example, based on the task data, scheduling system 120 may identify outstanding tasks that include, but are not limited to, a rig climb to inspect a stalled motorhead, repairing a broken hydraulic mechanism, reviewing inventory and preparing purchase orders, conducting and participating in a meeting to plan and prepare for a next day's tasks, and a mandated rest period. Additionally, in some instances, scheduling system 120 may parse the task data to identify the task scores associated with each of these outstanding tasks, such as a task score of three for the rig climb and the repairs to the broken hydraulic mechanism, a task score of two for the scheduled meeting, a task score of unity for the inventory review and the preparation of the purchase orders, and a task score of zero for the rest period.

Additionally, in some aspects, scheduling system 120 may parse the performance data to extract performance metrics associated with the outstanding and/or similar tasks, completed by corresponding ones of the employees during corresponding time periods on prior workdays. Scheduling system 120 may also parse the performance data to identify the task scores associated with each of the outstanding and/or similar tasks and further, aggregated biometric scores that characterize the levels of stress, fatigue, and/or mental focus experienced by the employees during completion of the outstanding and/or similar tasks during the corresponding time periods on the prior workdays. For example, and based on the parsed performance data, scheduling system 120 may determine that a particular employee, such as worker "A," performed rig clings of complexity and risk similar to the outstanding rig climb (e.g., to inspect the stalled motorhead) between 5:00 a.m. to 7:30 a.m. and between 6:00 a.m. to 8:30 a.m. on prior workdays, and that the levels of stress, fatigue, and mental focus experienced by worker "A" were especially conducive to the performance of complex, high-risk tasks during these time periods on the prior workdays. The extracted performance data may, however, indicate that worker "A" performs the prior rig climbs more rapidly and effectively during the 5:00 a.m. to 7:30 a.m. time period than during the 6:00 a.m. to 8:30 a.m. time slot.

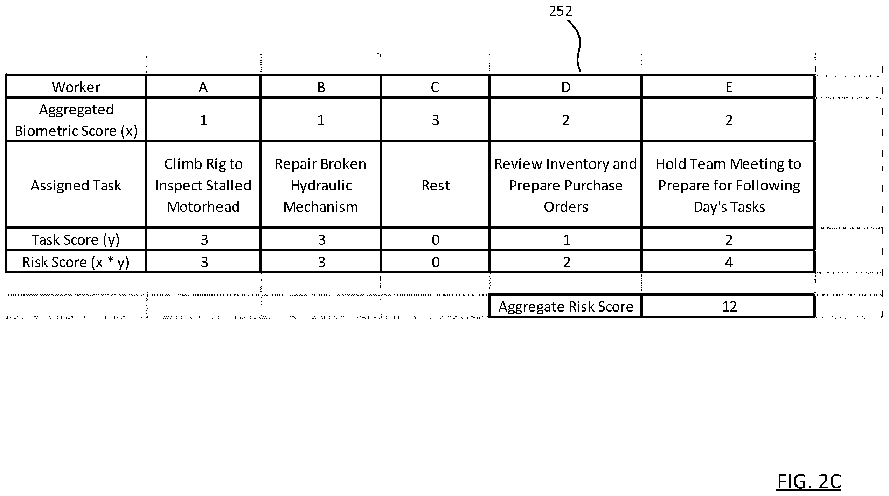

Based on the obtained task scores, the generated biometric scores indicative of the employees' expected stress, fatigue, or mental focus during the current workday, and the parsed performance data, an optimization module of scheduling system 120, e.g., optimization module 128, may generate an optimized allocation of the outstanding tasks to the employees for completion during the current workday using any the processes described above (e.g., in step 228). In certain aspects, in step 228, scheduling system 120 may establish a duration of the current workday, and may perform operations that assign at least one of the outstanding tasks to each of the employees for completion during the time slot, as described below in reference to FIG. 2C.

For example, based on the obtained task data (or other data obtained from scheduling database 124) scheduling system 120 may determine that each employee associated with a team of employees, e.g. workers "A", "B," "C," "D," and "E" of FIG. 2C, report for work at 7:00 a.m. and being an eight-hour shift. In some aspects, each of the employees has previously been assigned a task allocated for completion at 9:30 a.m., and the employees are available to work on additional tasks beginning at 9:30 a.m.

In some implementations, scheduling system 120 may obtain data identifying the outstanding tasks and corresponding task scores, e.g., as obtained in step 226, and may access the aggregated biometrics scores indicative of the employees' expected stress, fatigue, and mental focus at the 9:30 a.m. time slot. For example, as illustrated in FIG. 2C, the aggregated biometric scores for workers "A" and "B" may be unity, which indicates that the workers "A" and "B" are expected to exhibit low levels of stress and fatigue, and high levels of mental focus, at 9:30 a.m. on the current workday. Similarly, workers "D" and "E" may be characterized by an aggregated biometric scores of two, which indicates that these workers are expected to experience moderate levels of stress, fatigue, and mental focus at 9:30 a.m. on the current workday. Worker "C," however, may be characterized by aggregated biometric score of three, which indicates a high level of expected stress and fatigue, and a low level of mental focus, at 9:30 a.m. on the current workday.

To allocate the five outstanding tasks for completion by the five available employees in step 228, scheduling system 120 may generate multiple candidate assignments that represent the assignment of each of the outstanding tasks to each of the available employees. In some aspects, each of the candidate assignments may be associated with a corresponding risk score, which may be defined as a product of the task score of the corresponding task and the aggregated biometric score of the corresponding employee, and which may vary between the candidate assignments. For example, the generated candidate assignments may include, among other things, a candidate assignment of the rig climb task to worker "A," which may be associated with a risk score of three (e.g., a product of the task score of three with the aggregated biometric score of unity), and a candidate assignment of the rig climb task to worker "C," which may be associated with a risk score of nine (e.g., a product of the task score of three with the aggregated biometric score of three).

Scheduling system 120 may, in step 228, generate multiple combinations of the candidate assignments that would allocate each of the outstanding tasks to a corresponding employee for completion during the current workday. Each of the multiple combinations may be associated with a corresponding aggregated risk score, which may represent a sum of the risk scores associated with each of the constituent candidate assignments. For example, as illustrated in FIG. 2C, an exemplary combination 252 may include a first candidate assignment of the climb rig to inspect stalled motorhead task to worker "A" (e.g., associated with a risk score of three), a second candidate assignment of the repair broken hydraulic mechanism task to worker "B" (e.g., associated with a risk score of three), a third candidate assignment of the mandatory rest to worker "C" (e.g., associated with a risk score of zero), a fourth candidate assignment of the review inventory and prepare purchase orders task to worker "D" (e.g., associated with a risk score of four), and a fifth candidate assignment of the hold team meeting task to worker "E" (e.g., associated with a risk score of four). As described above, the aggregated risk score associated with combination 252 corresponds to twelve, which represents a sum of the risk scores of the first, second, third, fourth, and fifth constituent candidate assignments.

In some implementations, scheduling system 120 may establish, as the optimized task assignment in step 228, a corresponding one of the multiple combinations associated with a minimum of the aggregated risk scores. Additionally, and as described above, scheduling system 120 may constrain the value of the minimized aggregated risk score, and may perform additional or alternate optimization processes to assign outstanding tasks to available time slots in a manner that generates an optimized schedule having an aggregated risk score that falls blow a threshold value, or that falls within an established range of risk scores.

Further, using any of the optimization processes described above, and based on the parsed performance data, scheduling system 120 may assign each of the outstanding tasks to the corresponding employee for completion during the current workday in a manner that maximizes a speed and efficiency of the employee's completion of the allocated tasks while minimizing the risks of injury due to the experienced levels of fatigue, stress, and/or mental focus (e.g., in step 228). For example, the assignment of the rig climb or the repair of the broken hydraulic mechanism to either worker "A" or "B" would result in a risk score of three (e.g., based on common task scores of three for each task and common aggregated biometric scores of unity for workers "A" and "B"). In some instances, based on the application of one or more of the optimization processes described above to the parsed performance data, optimization module 128 may determine that worker "A" historically performs rig climbs more rapidly and efficiently than worker "B" when workers "A" and "B" experience comparable levels of fatigue, stress, and/or mental focus, and may assign the rig climb to worker "A" and the repair of the broken hydraulic mechanism to worker "B."

Referring back to FIG. 2B, scheduling system 120 may generate data, e.g., schedule data 132, identifying the optimized allocation, which may be transmitted to devices operated by or associated with each of the employees, such as workers "A", "B," "C," "D," and "E" (e.g., in step 230). The transmitted data may include, but is not limited to, data identifying each of the tasks assigned to corresponding ones of the employees, and data identifying the corresponding time slots to which scheduling system 120 assigned the outstanding tasks. The employee devices may receive the transmitted data, and may render portions of data presentation with a corresponding display unit, such as a touchscreen display. In certain aspects, each of the employees may review the presented scheduling data prior to or during a scheduled shift, and may initiate a performance of their respective allocated tasks.

Additionally, and as described above, scheduling system 120 may also receive and store data indicative of an outcome of the completion of the assigned tasks by the employees (e.g., workers "A", "B," "C," "D," and "E") during the scheduled time slots on the current workday (e.g., in step 232). For example, and as described above, the received outcome data may include one or more performance metrics that characterize a speed and an efficacy of the employees' completion of corresponding ones of the assigned tasks during the current workday and additionally or alternatively, data identifying corresponding ones of the employees, the corresponding assigned tasks, and corresponding scheduled time slots. In some aspects, in step 232, scheduling system 120 may store portions of the received outcome data within a portion of a structured data repository (e.g., performance database 125), and may link portions of the received outcome data with corresponding task scores and to corresponding aggregated biometric scores using any of the processes described above. By linking the performance of user 101 during a completion of an outstanding task having a corresponding task score to a corresponding aggregated biometric score, scheduling system 120 may correlate performance metrics characterizing an employee's performance of a task having a known level of complexity and risk to a level of stress, fatigue, and/or mental focus experienced by that employee. Exemplary process 220 is then complete in step 232.

In certain implementations described above, scheduling system 120 may establish schedules based on an allocation outstanding tasks to user 101 for allocation during a current workday (e.g., in FIG. 2A), and further, an allocation of one or more outstanding tasks to each member of a team of employees (e.g., in FIG. 2B). In other implementations, scheduling system 120 may perform operations that dynamically modify a scheduled previously established on behalf of a user, e.g., user 101, based on detected changes in a level of stress, fatigue, or mental focus experienced in real time by the user. For example, scheduling system 120 may assign one or more tasks to user 101 based on an expected level of stress, fatigue, and/or mental focus during corresponding portions of a workday.

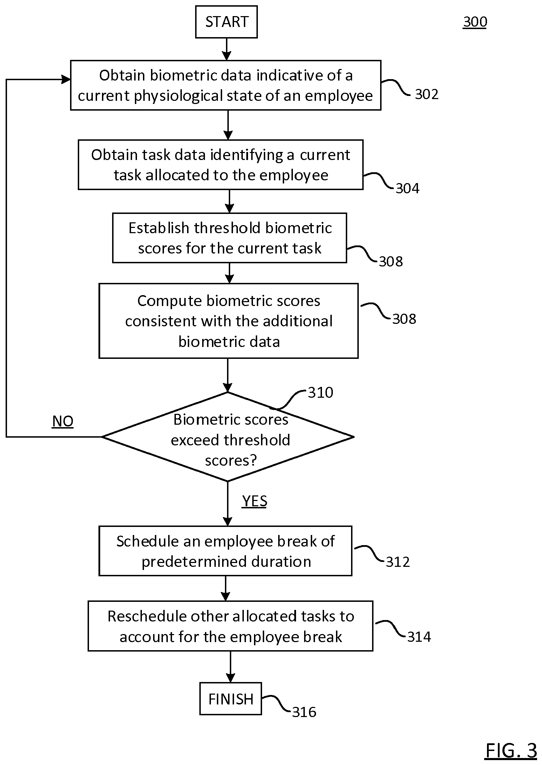

As described below in reference to FIG. 3, scheduling system 120 may continue to receive biometric data collected by a sensor device associated with user 101, e.g., sensor device 102, and based on the collected biometric data, may determine that user 101's actual level of stress, facture, and/or mental focus deviated from the expected level of stress, fatigue, and/or mental focus. In response to the determination, scheduling system 120 may impose a mandatory break in user 101's schedule, and perform operations that e-allocate the remaining tasks allocated to user 101 for completion during the current workday or during other workdays.

FIG. 3 is a flowchart of an example process 300 for dynamically adjusting allocated tasks based on received biometric data. In certain aspects, a computer system (e.g., scheduling system 120) may perform the steps of example process 300. For example, scheduling system 120 may receive biometric data indicative of a current physiological state of a user, e.g., user 101, may determine that user 101's current physiological state deviates from an expected physiological state consistent with an allocated task, and in response to the determination, may impose a mandatory break within user 101's schedule and perform operations that re-schedule the previously allocated tasks throughout the current workday.

As described above, scheduling system 120 may collect and store data indicative of a physiological state of a user, such as user 101. For example, user 101 may be associated with a sensor device having one or more biometric sensors, e.g., sensor device 102. As described above, sensor device 102 may include one or more biometric sensors configured to capture data indicative of a physiological state of user 101, and further, additional components that store the captured biometric data and transmit portions of captured biometric data to scheduling system 120 at various temporal intervals. By way of example, the biometric data captured and stored by sensor device 102 may include, but is not limited to, an active and resting heart rate, a respiration rate, a blood pressure, and a body temperature of user 101. In some aspects, scheduling system 120 may receive the biometric data transmitted from sensor device 102, and may store the received biometric data 104 within a portion of a data repository, such as biometric database 122, as described above.

In some aspects, sensor device 102 may capture and store additional biometric data, which may be transmitted to scheduling system 120. Scheduling system 120 may receive the additional biometric data and store that additional biometric data within a portion of scheduling database 122 (e.g., in step 302). The additional biometric data may, in certain instances, characterize a current physiological state of user 101, and may include, but is not limited to, user 101's current heart rate, a current rate of user 101's respiration, user 101's current blood pressure, and user 101's current body temperature.

Scheduling system 120 may also access a portion of scheduling database, e.g., scheduling database 124 and obtain data indicative of a task currently allocated to user 101 for completion (e.g. in step 304). The obtained data may also include a task score associated with the currently allocated task, which may reflect a level of complexity or risk associated with the currently allocated task. For instance, based on the obtained data, scheduling system may establish that user 101 is currently examining various pieces of telecommunications equipment, which may represent a complex and high-risk task having a task score of three.

In step 306, scheduling system 120 may establish threshold biometric scores indicative of a level of stress, fatigue, and/or mental focus permitted during the performance of the currently allocated task, e.g., the examination of various inaccessible pieces of telecommunications equipment (e.g., in step 306). For example, scheduling system 120 may establish that user 101 should, during examination of the various pieces of telecommunications equipment, experience not less than high level of mental focus and not more than a low level of fatigue, which may corresponding to fatigue and mental-focus scores of unity. Scheduling system 120 may, however, establish that user 101 can experience up to a moderate level of stress during a successful and safe examination of the telecommunications equipment. In view of the moderate stress level, scheduling system 120 may establish a permissible stress score of two for the examination of the telecommunications equipment.

Further, and based on the additional biometric data characterizing user 101's current physiological state, scheduling system 120 may also establish one or more biometric scores indicative of a current level of stress, fatigue, and/or mental focus experienced by user 101 (e.g., in step 308). For example, as described above, biometric scores generated by an analytical module of scheduling system 120, e.g., analytical module 126, may indicate that, during an examination of the telecommunications equipment between 7:30 a.m. and 9:30 a.m. on the current workday, scheduling system 120 expects that user 101 will experience a low level of fatigue and stress, and a high level of mental focus.

The additional biometric data, may, in some aspects, may indicate that user 101's current heart rate exceeds user 101's resting heart rate by nearly 20%. Using any of the exemplary processes described above, scheduling system 120 may establish that the increase in user 101's current heart rate corresponds to an high level of stress, which may be correspond to a stress score of three, but may determine that the increase in the heart rate alone does not modify the previously determined fatigue and mental-focus scores of unity.

In certain aspects, scheduling system 120 may determine whether one or more of the computed biometric scores exceed the determined threshold biometric scores for the currently allocated task (e.g., in step 310). For example, scheduling system 120 that the fatigue and mental-focus scores associated with user 101 are consistent with the threshold fatigue and mental-focus scores for the examination of telecommunications equipment, e.g., of the threshold fatigue and mental-focus scores of unity. Scheduling system 120 may, however, determine that user 101's newly computed stress score of three, which resulted from the detected 20% increase in user 101's current heart rate, exceeds the threshold stress score of two established for the examination of telecommunications equipment.

If scheduling system 120 were to determine that at least one of the newly computed stress, fatigue, or mental-focus scores exceeds a corresponding one of the threshold stress, fatigue, or mental-focus scores (e.g., step 310; YES), scheduling system 120 may replace the currently allocated task with a mandatory break having a predetermined duration (e.g., in step 312). For example, as described above, scheduling system 120 may determine that the newly computed stress score of three exceeds the threshold stress score of unity (e.g., in step 310), and based on the determination, scheduling system 120 may impose a mandatory, thirty-minute break in user 101's allocated tasks. During the break, the enterprise's internal policies may prohibit user 101 from an active performance of the allocated tasks, and scheduling system 120 may generate and transmit data indicative of the mandatory break to client device 110, which may render and present the transmitted data to user 101.

In view of the mandatory break, and using any of the exemplary processes described above, scheduling system 120 may perform additional operations that reschedule each of the remaining tasks allocated to user 101 during the current workday (e.g., in step 314). Exemplary process 300 may then be complete in step 314.

If however, scheduling system 120 were to determine that each of the newly computed stress, fatigue, and metal-focus scores do not exceed the established threshold values (e.g., step 310; NO), then exemplary process 300 may pass pack to step 302, and scheduling system 120 may await a receipt of additional biometric data collected by sensor device 102, as described above.

In additional implementations, system 120 may implement one or more of the exemplary processes described above to allocate, on an ad-hoc basis, a particular task to an employee based not only on the individual's actual level of stress, fatigue, or mental focus, but also on the individual ability to access physical resources necessary to successfully complete the allocated task. For example, the allocated task may correspond to a response to a medical emergency at a particular geographic location, and scheduling system 120 may allocate the response to an first responder that currently experiences a low level of fatigue and stress, and a high level of mental focus, and further, is disposed proximate to the geographic location with equipment (e.g., an ambulance, advance life support equipment, etc.) consistent with a nature of the medical emergency. Additionally, in other examples, scheduling system 120 may be associated with a ride-sharing service, such as Uber^{™} or Lyft^{™}, and the task may include a customer request for transportation from a residence to an airport disposed approximately forty-five minutes away from the residence. In certain aspects, scheduling system 120 may allocate the customer request to an available driver having a level of fatigue consistent with forty-five minute and disposed proximate to the residence.

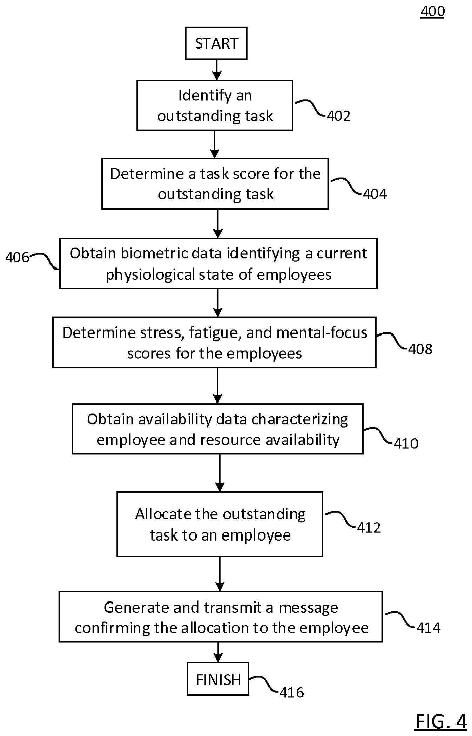

FIG. 4 is a flowchart of an exemplary process 400 for allocating, on an ad-hoc basis, tasks to employees for completion based on collected biometric data characterizing the employees' physiological condition. In certain aspects, a computer system (e.g., scheduling system 120) may perform the steps of example process 400. For example, scheduling system 120 may receive biometric data indicative of a current physiological state one or more employees or agents of an enterprise, may identify a task to be allocated among the agents or employees, may characterize an availability of one or more resources to the employees or agents, and may allocate the task to one of the employees and agents based on their current physiological states and the available resources.

In certain implementations, scheduling system 120 may identify an outstanding task awaiting allocation to one of the employees of the enterprise (e.g., in step 406). By way of example, the outstanding task may include, but is not limited to, a request by a customer of a ride-sharing service, such as Uber^{™} or Lyft^{™} for transportation from the customer's residence to an airport disposed approximately forty-five minutes away from the residence, and the employees may include one or more drivers associated with the ride-sharing service.

Scheduling system 120 may, in certain instances, receive the customer request from a computing system maintained by the ride-sharing service, and may store the received customer request along with a corresponding request time within scheduling database 122. The customer request may, in some aspects, identify the customer requesting the transportation, geographic positions of a pick-up location and a destination, and other ride-specific information, such as a number of passengers, a requested type of vehicle, e.g., a SUV or sedan, and requested child-safety seat. Further, scheduling system 120 may obtain data identifying the outstanding task, e.g., task data, from scheduling database 122.

Scheduling system 120 may also determine a metric, e.g., a task score, indicative of a level of complexity and risk of injury associated with the outstanding task (e.g., in step 404). For example, and as described above, values of the determined task score may ask scores may range from zero (e.g., negligible complexity and risk) to three (e.g., high complexity and risk).

In some aspects, scheduling system 120 may establish the task score for the customer request, e.g., the outstanding task based on factors that include, but are not limited to, an expected duration of the trip, current or expected traffic conditions, current or expected weather conditions, and road-surface conditions along an expected route, such as potholes, constructions, etc. By way of example, the customer request may be associated with a request time of 5:00 a.m., and in certain instances, scheduling system 120 may access one or more third-party systems to obtain information identifying expected weather and traffic conditions at the 5:00 a.m. pickup, and information identifying a potential route for travelling from the customer's residence to the airport.

Based on the obtained information, scheduling system 120 may determine that, among other things, the potential route includes main freeways and other multi-lane roadways associated with moderate traffic at the 5:00 a.m. pickup time, and that the weather forecast predicts moderate rain beginning around 12:00 a.m. and extending throughout a morning commute. In some aspects, scheduling system 120 may establish a task score for the customer request, e.g., a task score of two, that reflects a level of complexity and risk consistent with the early pick-up time of 5:00 a.m., the moderate levels of traffic and congestion across the route, and the poor weather conditions.

Further, and as described above, scheduling system 120 may collect and store data indicative of a physiological state of the employees, such as the drivers of the ride-share service, during one or more prior workdays or shifts. For example, each of the drivers may wear, hold, or operate a sensor device having one or more biometric sensors, e.g., sensor device 102. The sensor devices may include one or more biometric sensors configured to capture biometric data characterizing the drivers and additional components that store the captured biometric data and transmit portions of captured biometric data to scheduling system 120 at various temporal intervals. By way of example, the biometric data may include, but are not limited to, a heart rate, a respiration rate, a blood pressure, and a body temperature of each of the drivers. In some aspects, scheduling system 120 may receive the biometric data transmitted from the sensor devices, and may store the received biometric data within a portion of a data repository, such as biometric database 122, as described above.

In some implementations, and in response to the customer request, scheduling system 120 may obtain portions of the stored biometric data, e.g., from biometric database 122, that reflect current physiological states of the drivers (e.g., in step 406). The obtained portion of the biometric data may, in certain instances, characterize current heart rates, current rates of respiration, current blood pressures, and/or current body temperatures of the drivers. Based on the biometric data characterizing the drivers' current physiological state, scheduling system 120 may perform operations that establish one or more biometric scores indicative of a current level of stress, fatigue, and/or mental focus experienced by each of the drivers (e.g., in step 408). For example, and using any of the exemplary processes described above, an analytical module of scheduling system 120, e.g., analytical module 126, may apply one or more machine learning techniques, one or more algorithmic or research-based techniques, and/or one or more probabilistic techniques to portions of the stored and/or obtained biometric data to generate the biometric scores indicative of the drivers' current levels of stress, fatigue, and/or mental focus, and further, to generate aggregated biometric scores reflecting the drivers' overall physiological states.

For example, the drivers may include a first driver that operates a SUV and whose shift will end at 6:00, a second driver that operates a sedan and whose shift started at 4:30 a.m., and a third driver that operates a SUV and whose shift started at 2:00 a.m. and will end at 10:00 a.m. The shift of the first driver may be characterized as especially busy and may include several long trips, while the third driver's shift may be characterized as especially light. Further, by the 5:00 a.m. request time, the second driver may await a first customer.

In certain instances, and in view of the first driver's busy overnight shift, scheduling system 120 may process the obtained biometric data and determine that the first driver is currently experiencing a high level of fatigue, a low level of stress, and further, a high level of mental focus, and may assign the first user a fatigue score of three, a stress score of unity, and a mental-focus score of three. In contrast, the second driver recently started the shift, and based on the obtained biometric data, scheduling system 120 may determine that the second driver currently experiences low levels of fatigue and stress, and a high level of mental focus, and may assign fatigue, stress, and mental-focus scores of unity. Further, while the third driver partially completed a slow overnight shift, scheduling system 120 may process the obtained biometric data to establish that the third driver obtained a significant amount of sleep prior to a start of the overnight shift, and may determine that the third driver also currently experiences low levels of fatigue and stress, with a high level of mental focus. Scheduling system 120 may assign fatigue, stress, and mental-focus scores of unity to the third driver.

Referring back to FIG. 4, scheduling system 120 may also obtain availability data indicative of an availability of the drivers and resources associated with the outstanding task (e.g., in step 410). For example, and as described above, the customer request may specify a customer preference for a vehicle, e.g., a SUV, may establish current distances between each of the three drivers and the customer residence. In certain instances, scheduling system 120 may obtain the current driver locations based on internet-protocol (IP) addresses associated with each of the drivers' sensor devices and additionally or alternatively, based on positioning data obtained from portions of the received biometric data and/or from an external positioning system, e.g., through a corresponding API call. Scheduling system 120 may also obtain the distances between the current driver locations and the customer residence through an execution of one or more application programs or through interaction with the external positioning system, e.g., through an API call. For example, and based on the availability data, scheduling system 120 may determine that the first and third drivers operate SUVs, that the first driver is located 0.6 miles from the customer residence, and that the third driver is located 1.3 miles from the customer residence.

In some aspects, and using any of the exemplary processes described above, scheduling system 120 may allocate the outstanding task to one of the first, second, or third drivers for completion based on the established task score, the obtained availability data, and the generated biometric scores indicative of the drivers' current levels of stress, fatigue, or mental focus (e.g., in step 412). For example, an optimization module of scheduling system 120, e.g., optimization module 128, may establish that an optimal allocation of the customer request under the current weather and traffic conditions would require a driver that currently experiences no more than a moderate amount of fatigue and not less than a moderate amount of mental focus. Based on the established threshold levels of mental focus, and in view of the customer preferences and availability data, scheduling system 120 may allocate the customer request to the third driver, who operates the SUV, is disposed 1.3 miles from the customer residence, and is currently experiencing a low level of fatigue and a high level of mental focus.

Scheduling system 120 may store data identifying the allocation of the customer request to the third driver within a portion of a data repository, e.g., scheduling database 124, and may generate and transmit a message indicative of the allocation to a device operated by the third driver. The third-driver device may receive the message, and present at least a portion of the message to the third driver a corresponding display unit, e.g., a touchscreen display.

In certain implementations described above, scheduling system 120 may establish one or more time-varying patterns based on, among other things, determined or collected biometric data characterizing a physiological state of user 101 during one or more prior time periods, during a current time period, and additionally or alternatively, in real-time, and further, may assign outstanding tasks to user 101 based on these established time-varying patterns. The disclosed implementations are, however, not limited to time-varying patterns in the determined and collected biometric data. In other implementations, scheduling system 120 may also establish correlations between the determined or collected biometric data and various metrics that characterize a performance of user 101 when completing tasks during the current or prior time periods (or in real-time) and/or an outcome associated with the completed tasks. For example, scheduling system 120 may establish a correlation between changes in user 101's biometric data (e.g., as described above) and corresponding performance metrics, such as productivity, rate or error, and other business outcomes, and based on the established correlation, assign outstanding tasks to user 101 for completion during a current workday using any of the processes described above. In other examples, scheduling system 120 may detect differences in biometric data (e.g., heart rate, respiration rate, etc.) between employees of the enterprise, correlate these detected differences with any of the performance metrics described above, and based on the established correlation, assign outstanding tasks to the employees for completion using any of the processes described above

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification, including prioritization and categorization engine 122, allocation engine 124, and workflow engine 126, can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an HTML page, to a user device, e.g., for purposes of displaying data to and receiving user input from a user interacting with the user device, which acts as a client. Data generated at the user device, e.g., a result of the user interaction, can be received from the user device at the server.

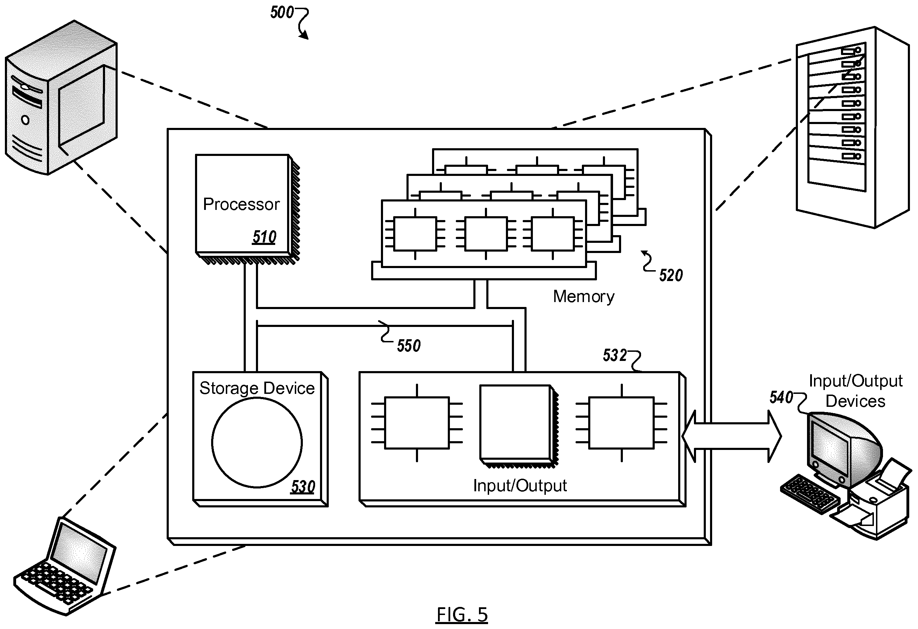

An example of one such type of computer is shown in FIG. 5, which shows a schematic diagram of a generic computer system 500. The system 500 can be used for the operations described in association with any of the computer-implemented methods described previously, according to one implementation. The system 500 includes a processor 510, a memory 520, a storage device 530, and an input/output device 540. Each of the components 510, 520, 530, and 540 are interconnected using a system bus 550. The processor 510 is capable of processing instructions for execution within the system 500. In one implementation, the processor 510 is a single-threaded processor. In another implementation, the processor 510 is a multi-threaded processor. The processor 510 is capable of processing instructions stored in the memory 520 or on the storage device 530 to display graphical information for a user interface on the input/output device 540.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 may be a floppy disk device, a hard disk device, an optical disk device, or a tape device.

The input/output module 532 includes hardware or hardware and software for interfacing system 500 with the input/output device 540 or other devices or interfaces.

Further, for situations in which the systems discussed here collect personal information about users, or may make use of personal information, the users may be provided with an opportunity to control whether programs or features collect personal information, e.g., information about a user's social network, social actions or activities, profession, a user's preferences, or a user's current location, or to control whether and/or how to receive content from the content server that may be more relevant to the user. In addition, certain data may be anonymized in one or more ways before it is stored or used, so that personally identifiable information is removed. For example, a user's identity may be anonymized so that no personally identifiable information can be determined for the user, or a user's geographic location may be generalized where location information is obtained, e.g., to a city, zip code, or state level, so that a particular location of a user cannot be determined. Thus, the user may have control over how information is collected about him or her and used by a content server.

While this specification contains many specifics, these should not be construed as limitations, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

Thus, particular implementations have been described. Other implementations are within the scope of the following claims. For example, the actions recited in the claims may be performed in a different order and still achieve desirable results.

## Claims

1. A system, comprising:
one or more processors; and
one or more storage devices storing instructions that are operable, when executed by the one or more processors, to cause the one or more processors to perform operations comprising:
obtaining first biometric data associated with a plurality of users, the first biometric data being captured by one or more biometric sensors during prior time periods;
obtaining task data identifying one or more tasks assigned to a first user for completion, the task data comprising task scores indicative of a level of complexity or risk associated with each of the tasks;
detecting, within the first biometric data, a time-varying pattern in a biometric characteristic of a first one of the users;
determining a schedule for completing the tasks during a predetermined time period, the established schedule being consistent with the task scores and the detected time-varying pattern in the biometric characteristic of the first user; and
transmitting data indicative of the determined schedule to a device of the first user, the transmitted data identifying portions of the predetermined time period allocated to the assigned tasks.

2. The system of claim 1, wherein:
the detected time-varying pattern corresponds to a variation in a value of the biometric characteristic across portions of the prior time periods; and
the determining comprises:
determining, based on the detected time varying patterns, biometric scores indicative of the biometric characteristic during portions of the predetermined time period;
applying one or more optimization algorithms to the task and biometric scores; and
determining the schedule for completing the assigned tasks during the predetermined time period based on an outcome of the applied optimization algorithms.

3. The system of claim 1 or 2, wherein:
the first biometric data comprises at least one of a heart rate, a respiration rate, a blood pressure, a body temperature, a skin conductance, EEG data, location data, or sleep data; and
the biometric characteristic comprises at least one of a level of stress, fatigue, or mental focus.

4. The system of claim 1, 2 or 3, wherein the one or more processors further perform the operations of:
detecting, within the first biometric data, time-varying patterns in a plurality of biometric characteristic of the first user; and
determining the schedule for completing the assigned tasks during the predetermined time period based on the detected time-varying patterns in the biometric characteristics of the first user.

5. The system of any of the preceding claims, wherein the detecting comprises:
applying one or more analytical processes to at least a portion of the first biometric data, the analytical processes comprising at least one of a machine learning algorithm, an algorithmic technique, a research-based technique, or a probabilistic technique; and
based on an outcome of the one or more applied analytical processes, detecting the time-varying pattern in the biometric characteristic of the first user.

6. The system of any of the preceding claims, wherein the one or more processors further perform the operations of:
receiving second biometric data;
generating, based on the second biometric data, a biometric score that reflects a current level of at least one of stress, fatigue, or mental focus of the first user.

7. The system of claim 6, wherein the one or more processors further perform the operations of:
determining that the generated biometric score exceeds a threshold score associated with a first one of the assigned tasks;
in response to the determination that the generated biometric score exceeds the threshold score, modifying the determined schedule to replace the first assigned task with a break having a predetermined duration.

8. The system of any of the preceding claims, wherein the one or more processors further perform the operations of:
detecting, within the biometric data, a time-varying pattern in the biometric characteristic of each of the users during the prior time periods;
based on the detected time-varying patterns, assigning at least one of the tasks to each of the users for completion within corresponding portions of the predetermined time period; and
transmitting data indicative of the at least one assigned task to devices associated with each of the users.

9. The system of claim 8, wherein the determining comprises:
determining, based on the detected time-varying patterns, biometric scores indicative of the biometric characteristic of each of the users during portions of the predetermined time period;
applying one or more optimization algorithms to the task and biometric scores; and
assigning the at least one task to each of the second users based on an outcome of the applied optimization algorithms.

10. The system of claim 8 or 9, wherein detecting the time-varying patterns comprises:
applying a machine-learning algorithm to at least a portion of the second biometric data; and
based on an outcome of the applied machine-learning algorithm, detecting the time-varying pattern in the biometric characteristic of each of the users.

11. The system of claim 8 or 9, wherein the one or more processors further perform the operations of:
obtaining data indicative of a performance of at least one of the users during a completion of a prior task, the performance data identifying at least one of a work quality of a completion speed; and
assigning the at least one task to the at least one of the users based on the obtained performance data.

12. The system of any of the preceding claims, wherein the one or more processors further perform the operations of:
based on the first biometric data, establishing a correlation between a biometric characteristic of the first user and data characterizing a prior completion of one or more tasks by the first user; and
determining the schedule for completing the tasks during a predetermined time period, the established schedule being consistent with the task scores and the established correlation.

13. The system of any of the preceding claims, wherein the one or more processors further perform the operations of:
obtaining outcome data characterizing at least one of (i) a completion of one or more additional tasks by the first user during prior time periods or (ii) an outcome associated with the completion of the one or more additional tasks; and
based on a portion of the obtained outcome data, determining the schedule for completing the tasks during a predetermined time period, the established schedule being consistent with the task scores and the detected time-varying pattern in the biometric characteristic of the first user.

14. A computer-implemented method, comprising:
obtaining, by at least one processor, task data identifying one or more tasks assigned to a first user for completion within a predetermined time period, the task data comprising task scores indicative of a level of risk associated with each of the tasks;
obtaining, by the at least one processor, first biometric data associated with a plurality of users, the first biometric data being captured by one or more biometric sensors during prior time periods;
obtaining, by the at least one processor, task data identifying one or more tasks assigned to a first user for completion, the task data comprising task scores indicative of a level of complexity or risk associated with each of the tasks;
detecting, by the at least one processor, and within the first biometric data, a time-varying pattern in a biometric characteristic of a first one of the users;
determining, by the at least one processor, a schedule for completing the tasks during a predetermined time period, the established schedule being consistent with the task scores and the detected time-varying pattern in the biometric characteristic of the first user; and
transmitting, by the at least one processor, data indicative of the determined schedule to a device of the first user, the transmitted data identifying portions of the predetermined time period allocated to the assigned tasks.

15. A system, comprising:
one or more processors; and
one or more storage devices storing instructions that are operable, when executed by the one or more processors, to cause the one or more processors to perform operations comprising:
obtaining task data identifying one or more tasks, the task data comprising task scores indicative of a level of risk associated with each of the tasks;
obtaining first biometric data associated with a plurality of users, the first biometric data being captured by one or more biometric sensors during prior time periods;
detecting, within the first biometric data, a time-varying pattern in a biometric characteristic of each of the users during the prior time periods;
assigning at least one of the tasks to each of the users for completion within corresponding portions of a predetermined time period, the assigned tasks being consistent with the task scores and the detected time-varying patterns; and
transmitting data indicative of the at least one assigned task to devices associated with corresponding ones of the users, the transmitted data identifying, for each of the users, the at least one assigned task and the corresponding portion of the predetermined time period.
